# EUROPEAN PATENT SPECIFICATION

(11) **EP 3 211 029 B1**
(45) Date of publication and mention of the grant of the patent: **19.10.2022**
(21) Application number: 15852651.7
(22) Date of filing: 12.10.2015
(51) Int. Cl.: C08K 5/092, C08K 5/10, C08K 5/12, C08L 27/06, C08K 5/11

(54) **PLASTICIZER COMPOSITION COMPRISING DI(2-ETHYLHEXYL)CYCLOHEXANE-1,4-DICARBOXYLATE AND TRIBUTYL CITRATE, AND VINYL CHLORIDE RESIN COMPOSITION COMPRISING SAME**
WEICHMACHERZUSAMMENSETZUNG MIT DI(2-ETHYLHEXYL)CYCLOHEXAN-1,4-DICARBOXYLAT UND TRIBUTYLCITRAT SOWIE VINYLCHLORIDHARZZUSAMMENSETZUNG DAMIT
COMPOSITION DE PLASTIFIANT COMPRENANT DU DI(2-ÉTHYLHEXYL)CYCLOHEXANE-1,4-DICARBOXYLATE ET DU TRIBUTYL CITRATE, ET COMPOSITION DE RÉSINE DE CHLORURE DE VINYLE COMPRENANT CELLE-CI

(30) Priority: 22.10.2014 KR 20140143332
(43) Date of publication of application: 30.08.2017
(73) Proprietor: Hanwha Chemical Corporation, Seoul 04541 (KR)
(72) Inventor: KIM, Yeo Jin, Seoul 04358 (KR); KIM, Jae Song, Daejeon 34067 (KR); YOON, Kyong Jun, Daejeon 34049 (KR)
(74) Representative: Bird & Bird LLP
(86) International application number: PCT/KR2015/010723
(87) International publication number: WO 2016/064125

(56) References cited:
- WO-A1-2013/004265
- KR-A- 20040 044 678
- KR-A- 20090 038 514
- KR-A- 20090 058 067
- KR-A- 20130 116 296
- US-B2- 8 283 411

## Description

### [TECHNICAL FIELD]

The present invention relates to a plasticizer composition capable of improving migration characteristics of a plasticizer and a vinyl chloride resin composition comprising the same.

### [BACKGROUND ART]

A vinyl chloride-based resin, which is a hybrid polymer containing 50% or more of homopolymer of vinyl chloride, is one of the five general-purpose thermoplastic resins prepared by suspension polymerization and emulsion polymerization. Among them, the polyvinyl chloride resin prepared by emulsion polymerization is used in a wide range of applications such as flooring materials, wallpaper, tarpaulin, artificial leather, toys, automobile undercoating materials, etc. by mixing plasticizers, stabilizers, fillers, blowing agents, pigments, viscosity depressants, titanium dioxide (TiO₂), and auxiliary raw materials with special functions, thereby performing a coating-forming and a mold coating-forming methods in the form of a plastisol.

Particularly, the wallpaper is the most exposed product in residential and office space, and more than 60% is manufactured using vinyl chloride-based resin. Recently, the most important issue in wallpapers is related to environment-friendly wallpapers. The criteria for environmental friendliness are determined by the HB grade (3 grades: very good, good, moderate), which is graded based on the amount of emission of volatile organic compounds (VOCs) being implanted in the Air Cleaning Association, and the presence or absence of phthalate-based plasticizers (especially DEHP, BBP, DBP), which are considered to be suspicious substances of environmental hormones in Korea.

The volatile organic compounds generated from vinyl chloride-based wallpapers are generated from additives for viscosity depressants for reducing viscosity of the plastisol, liquid stabilizers and solvents of oily inks used in the printing process, and the plasticizers having a high boiling point hardly have an influence. In particular, when the additives for reducing viscosity are added in an excess amount, not only the volatile organic compounds are generated but also it may be the cause of the deterioration of the product quality. Therefore, in order to reduce the generation of volatile organic compounds, it is necessary to minimize the amount of the liquid additive for viscosity depressant added which is the cause of the generation of volatile organic compounds.

Among the polyvinyl chloride resin compositions for wallpapers, the plasticizers are the liquid components that occupy the largest content, and examples thereof include phthalate-based products such as DEHP (Di-2-Ethyl Hexyl Phthalate), DINP (Di-IsoNonyl Phthalate), DIDP Decyl Phthalate), BBP (Butyl Benzyl Phthalate) and DBP (Di-n-butyl phthalate). In particular, DINP has been widely used.

However, the phthalate-based plasticizers, which are endocrine disrupters that socially interfere or disrupt the human hormonal actions, are considered suspicious as environmental hormones, and thus, there is a movement to regulate the phthalate plasticizers. Accordingly, it has been recently reported an example of using a non-phthalate-based plasticizer instead of a phthalate-based plasticizer.

For example, Korean Patent Publication No. 2008-0105341 discloses that DOTP, which is a non-phthalate-based plasticizer, is used alone or in combination with DINP (Di-IsoNonyl Phthalate). Since DOTP is not a phthalate-based plasticizer, it can stay away from the controversy over environmental hormones, but there is no advantage in terms of physical properties of wallpaper and has a problem in compatibility with the additives (stabilizer, additives for reducing viscosity) used as existing raw materials for manufacturing wallpaper, and various problems such as deterioration of foamability during wallpaper production and a rapid increase in viscosity during winter have been found.

In addition to DOTP, there exists di(2-ethylhexyl)cyclohexane-1,4-dicarboxylate (DEHCH) among the non-phthalate-based plasticizers, and it has a low viscosity at room temperature and at low temperatures and thus can implement excellent coating properties, and has a fast gelling rate and excellent forming properties, and especially there is substantially no environmental problems just as phthalate-based plasticizers, and thus has been attracting attention as a plasticizer for vinyl chloride resins.

However, despite the various advantages of DEHCH as described above, DEHCH has many limitations in its use for wallpapers because the migration characteristics to paper are worse than those of existing environmentally friendly plasticizers. The migration of the plasticizer refers to a phenomenon where the plasticizer is once present in the vinyl chloride-based resin and gradually flows out of the vinyl chloride-based resin as time passes, and this is an important factor limiting the use in flooring materials, wallpaper, tarpaulin, artificial leather, toys, automotive undercoating materials and the like which may have a direct impact on the human body.

The migration of the plasticizer is somewhat difficult to predict because it is strongly influenced by physical/chemical properties between the plasticizer and the vinyl chloride-based resin. Therefore, the migration characteristics should be evaluated by applying various plasticizers.

Accordingly, the present inventors have conducted extensive studies to resolve the problems in the migration of DEHCH simultaneously while maintaining the characteristics of DEHCH as a plasticizer, and found that when DEHCH and a citrate-based compound are used together as a plasticizer as described in the present invention, the above problem was solved, thereby completing the present invention.

WO 2013/004265 A1 relates to a PVC-based composition of a surface covering layer comprising a citrate-based plasticizer, to a surface covering comprising such a layer and a method to produce such a surface covering.

US 2010/298477 A1 discloses compositions based on slow fusing cyclohexanecarboxylic acid esters and at least one fast fusing plasticizer as useful as plasticizers for plasticizable polymers, particularly PVC.

US 2011/0040001 A1 reports on esters of cyclohexane polycarboxylic acids which are used as plasticisers for polyvinyl chloride to enable products with comparable mechanical properties to be obtained using less polyvinyl chloride.

### [DETAILED DESCRIPTION OF THE INVENTION]

### [Technical Problem]

One object of the present invention is to provide a plasticizer composition capable of improving migration characteristics of a plasticizer.

Another object of the present invention is to provide a vinyl chloride resin composition comprising the plasticizer composition.

### [Technical Solution]

To achieve the above objects, the present invention provides a plasticizer composition comprising di(2-ethylhexyl)cyclohexane-1,4-dicarboxylate, and tributyl citrate, wherein the weight ratio of di(2-ethylhexyl)cyclohexane-1,4-dicarboxylate and tributyl citrate is 9:1 to1:1.

The plasticizer composition according to the present invention is used as a plasticizer of vinyl chloride resin, and can significantly improve the migration characteristics of the plasticizer due to the interaction of two or more plasticizers.

The di(2-ethylhexyl)cyclohexane-1,4-dicarboxylate is a compound having the structure below, and is abbreviated as DEHCH.

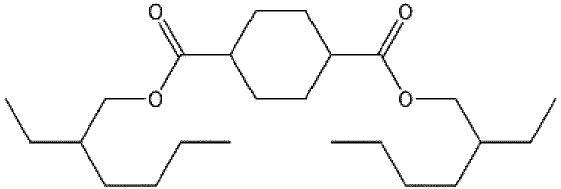

DEHCH has a low viscosity at room temperature and at low temperatures and thus can implement excellent coating properties, and has a fast gelling rate and excellent foaming property. In particular, the generation of volatile organic compounds can be minimized compared to conventional phthalate-based plasticizers, and thus it can replace the existing plasticizers. Even when DEHCH is used alone as a plasticizer of vinyl chloride resin, the desired physical properties of the vinyl chloride resin can be implemented, but DEHCH has a problem of migration.

The migration of the plasticizer refers to a phenomenon where a part of the plasticizer mixed with a polymer resin flows out of the polymer resin, and when the plasticizer flew out of the polymer resin enters the body, it may inhibit the normal activity of the endocrine system directly involved with the life activity or triggers an abnormal reaction, and thus the migration of the plasticizers should be inhibited as much as possible.

Thus, the present invention uses tributyl citrate to inhibit the migration of the plasticizer simultaneously while maintaining the superior characteristics as the plasticizer of DEHCH. Also disclosed is that the compound represented by Formula 1 above inhibits the migration of the plasticizer simultaneously while maintaining the superior characteristics as the plasticizer of DEHCH.

Tributyl citrate is an ester compound of citric acid and butyl alcohol, and the plasticizer should not flow out of the vinyl chloride resin due to the interaction such as hydrogen bond between the ester group and the DEHCH ester group.

Tributyl citrate can be purchased commercially and used or can be prepared according to the following Reaction Scheme 1.

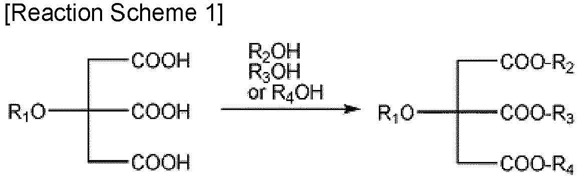

The reaction is an esterification reaction of citric acid or acetyl citric acid with butyl alcohol, and can be prepared by sequentially carrying out the reaction in one reaction or with different reactants depending on the structure of R₂ to R₄. The conditions for the conventional esterification reaction in the art may be used for the conditions of the reaction above.

According to the invention, the weight ratio of di(2-ethylhexyl)cyclohexane-1,4-dicarboxylate and tributyl citrate is 9:1 to 1:1. When the weight ratio exceeds 9.5:1, the migration characteristics of the plasticizer cannot be effectively improved because of the low content of tributyl citrate, whereas when the ratio is less than 1:9.5, the thermal stability and foamability are significantly reduced because of the low content of the di(2-ethylhexyl)cyclohexane-1,4-dicarboxylate.

According to the present invention, it was confirmed that when the weight ratio of di(2-ethylhexyl)cyclohexane-1,4-dicarboxylate and tributyl citrate is adjusted to 9:1 to 1:1, the migration characteristics of the plasticizer were improved.

Further, the present invention provides a vinyl chloride resin composition comprising 100 parts by weight of vinyl chloride resin, and 40 to 120 parts by weight of the plasticizer composition.

The vinyl chloride resin composition can have improved migration characteristics of the plasticizer by including the plasticizer composition according to the present invention. The vinyl chloride resin which is polyvinyl chloride (PVC) having a degree of polymerization of 700 to 1200 may be used, but is not limited thereto.

The vinyl chloride resin composition may further include at least one selected from the group consisting of additives, for example, stabilizers, blowing agents, fillers, and titanium dioxide (TiO₂). The additive may be appropriately selected depending on the properties to be improved in the vinyl chloride resin composition.

The stabilizer is added for the purpose of preventing the change of various physical properties caused by the cleavage of the main chain and crosslinking by forming a polyene structure, which is a chromophore, upon separation of HCI from the vinyl chloride resin, and includes at least one selected from the group consisting of Ca-Zn-based compounds, K-Zn-based compounds, Ba-Zn-based compounds, organic Tin-based compounds, metallic soap-based compounds, phenol-based compounds, phosphoric acid ester-based compounds or phosphorous acid ester-based compounds. More specific examples of the stabilizers which can be in the present invention include Ca-Zn-based compounds; K-Zn-based compounds; Ba-Zn-based compounds; organic Tin-based compounds such as mercaptide-based compounds, maleic acid-based compounds or carboxylic acid-based compounds; metallic soap-based compounds such as Mg-stearate, Ca-stearate, Pb-stearate, Cd-stearate or Ba-stearate, etc.; phenol-based compounds; phosphoric acid ester-based compounds; or phosphorous acid ester-based compounds, etc., and may be optionally included depending on the purpose of use. In the present invention, particularly, a K-Zn-based compound is used, and preferably, a K-Zn-based complex organic compound is used.

The stabilizer is preferably contained in an amount of 0.5 to 7 parts by weight, more preferably in an amount of 1 to 4 parts by weight based on 100 parts by weight of the vinyl chloride-based resin. If the content of the stabilizer is less than 0.5 parts by weight, there is a problem of poor thermal stability, whereas if the content of the stabilizer exceeds 7 parts by weight, more than necessary thermal stability may be exhibited.

The blowing agent used in the present invention includes at least one selected from chemical blowing agents, physical blowing agents or a mixture thereof.

The chemical foaming agent is not particularly limited as long as it is a compound which is decomposed at a specific temperature or higher to produce gas, and examples thereof include azodicarbonamide, azodiisobutyro-nitrile, benzenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, trihydrazino triazine and the like. The examples also include sodium bicarbonate, potassium bicarbonate, ammonium bicarbonate, sodium carbonate, ammonium carbonate and the like. Further, the physical foaming agent may be inorganic foaming agents such as carbon dioxide, nitrogen, argon, water, air, helium and the like, or organic foaming agents such as aliphatic hydrocarbon compounds comprising 1 to 9 carbon atoms, aliphatic alcohols comprising 1 to 3 carbon atoms, halogenated aliphatic hydrocarbon compounds comprising 1 to 4 carbon atoms and the like.

Specific examples of the compounds include methane, ethane propane, n-butane, isobutane, n-pentane, isopentane, neopentane and the like for the aliphatic hydrocarbon compounds; methanol, ethanol, n-propanol, isopropanol and the like for the aliphatic alcohols; and methyl fluoride, perfluoromethane, ethyl fluoride, 1,1-difluoroethane (HFC-152a), 1,1,1-trifluoroethane (HFC-143a), 1,1,1,2-tetrafluoroethane (HFC-134a), 1,1,2,2-tetrafluoromethane (HFC-134), 1,1,1,3,3-pentafluorobutane (HFC-365mfc), 1,1,1,3,3-pentafluoropropane (HFC.sub.13 245fa), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane, methyl chloride, methylene chloride, ethyl chloride, 1,1,1-trichloroethane, 1,1-dichloro-1-fluoroethane (HCFC-141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, dichlorohexafluoropropane and the like for the halogenated aliphatic hydrocarbon compounds. The amount of the blowing agent is preferably 0.5 to 5 parts by weight based on 100 parts by weight of the vinyl chloride resin. If the amount of the blowing agent is too small, the amount of gas generated for blowing is too small and thus the blowing effect is insignificant or cannot be expected, whereas if the amount of the blowing agent is too large, the amount of gas generated is too large so that it is difficult to expect the required physical properties to be exhibited.

The filler of the present invention is used for the purpose of improving the productivity and dry touch feeling of the vinyl chloride-based resin composition and include at least one selected from the group consisting of calcium carbonate, talc, titanium dioxide, kaolin, silica, alumina, magnesium hydroxide or clay.

In the vinyl chloride-based resin composition according to the present invention, the filler may preferably be contained in an amount of 30 to 150 parts by weight, more preferably in an amount of 50 to 130 parts by weight. When the filler is contained in an amount of less than 50 parts by weight, there is a problem of poor dimensional stability and economic efficiency, whereas when the filler is contained in an amount exceeding 130 parts by weight, the foamed surface is poor and the processability is reduced.

The vinyl chloride-based resin composition of the present invention can improve whiteness and concealability by adding titanium dioxide (TiO₂). The titanium dioxide may preferably be contained in an amount of 1 to 20 parts by weight, more preferably in an amount of 3 to 15 parts by weight, based on 100 parts by weight of the vinyl chloride resin. If titanium dioxide is contained in an amount of less than 3 parts by weight, the color does not appear properly after printing due to reduced whiteness and concealability, whereas if it is contained in an amount exceeding 15 parts by weight, the foamed surface is deteriorated.

The vinyl chloride resin composition according to the present invention can be prepared by a method commonly known in the art using a vinyl chloride-based resin, the plasticizer and optionally additives, and the method is not particularly limited.

The vinyl chloride resin composition can be used as flooring materials, wallpaper, tarpaulin, artificial leather, toys, automobile undercoating materials and the like, and particularly, the migration characteristics of the plasticizer are improved, thereby posing less environmental problems.

### [ADVANTAGEOUS EFFECT]

The plasticizer composition can improve the migration characteristics of the plasticizer by including di(2-ethylhexyl)cyclohexane-1,4-dicarboxylate and tributyl citrate in a weight ratio of 9:1 to 1:1. Accordingly, the vinyl chloride resin composition comprising the plasticizer composition according to the present invention can resolve environmental problems, and thus can be used as flooring materials, wallpapers, tarpaulin, artificial leather, toys, and automobile undercoating materials.

### [BRIEF DESCRIPTION OF THE DRAWINGS]

FIG. 1 and FIG. 2 show graphs illustrating the gelling rates of the plasticizer compositions of one example of the present invention and comparative example.
FIG. 3 and FIG. 4 show the migration test results of the plasticizer composition of one example of the present invention and comparative example.

### [DETAILED DESCRIPTION OF THE EMBODIMENTS]

Hereinafter, the present invention will be described in more detail by way of Examples.

### Examples 1 to 11

DEHCH and citrate-based compounds were mixed at the weight ratios shown in Table 1 to prepare plasticizer compositions, respectively.

### Comparative Examples 1 to 3

For comparison with the plasticizer compositions of the examples above, DINP (Comparative Example 1), DOTP (Comparative Example 2) and DEHCH alone (Comparative Example 3) were used as comparative examples.

### Experimental Example

100 parts by weight of polyvinyl chloride, 60 parts by weight of the plasticizer compositions of Examples and Comparative Examples above, 3 parts by weight of stabilizer (KKZ102PF, Woochang Chemical), 3 parts by weight of blowing agent (DWPX03, Dongjin Semichem), 10 parts by weight of viscosity depressant (V5125, BYK), 10 parts by weight of titanium dioxide (R902, Dupont) and 100 parts by weight of filler (OM-10, Omya Korea) were mixed in a Mathis mixer for 10 minutes to prepare a plastisol.

The viscosity and gelling rate of the prepared plastisol and the migration of the plasticizer were evaluated as follows.

As for viscosity, each plastisol prepared above was aged in a constant temperature oven at 25°C for 1 hour, and then the initial viscosity was measured using a Brookfield viscometer (spindle # 6, 20 RPM). The results are shown in Table 1 below.

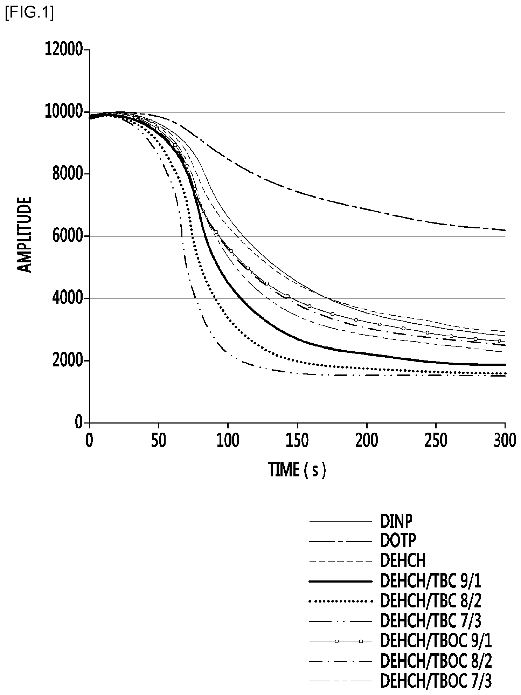

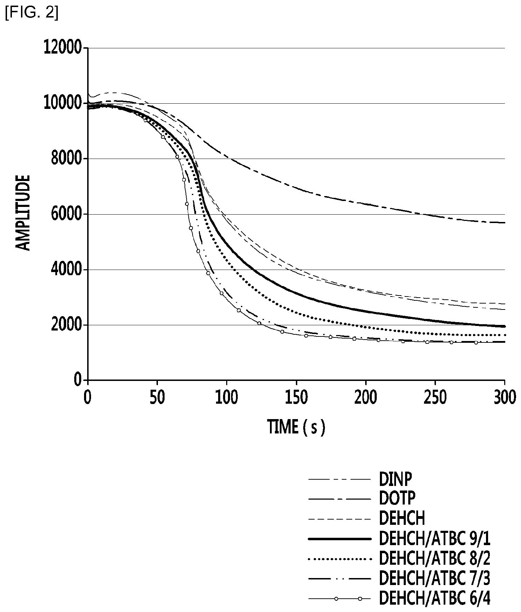

The gelling rate of each plastisol prepared above was measured at 110°C using an SVNC equipment. As the gelling proceeds in the SVNC equipment, the amplitude decreases. The gelling rates were compared and measured using the decreasing rate. The results are shown in FIG. 1 and FIG. 2. In addition, the gelling rates were graded and are shown in Table 1 below (very good 5>4>3>2>1 very poor).

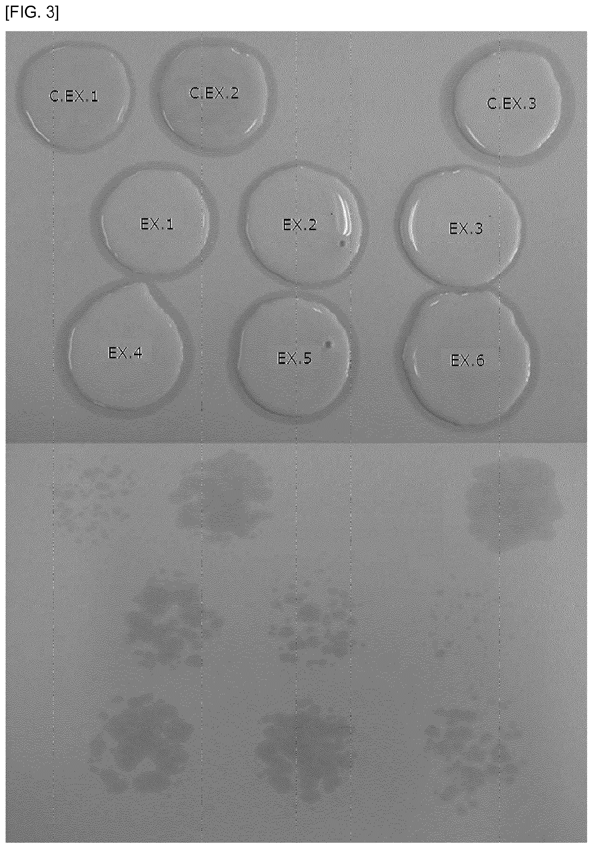

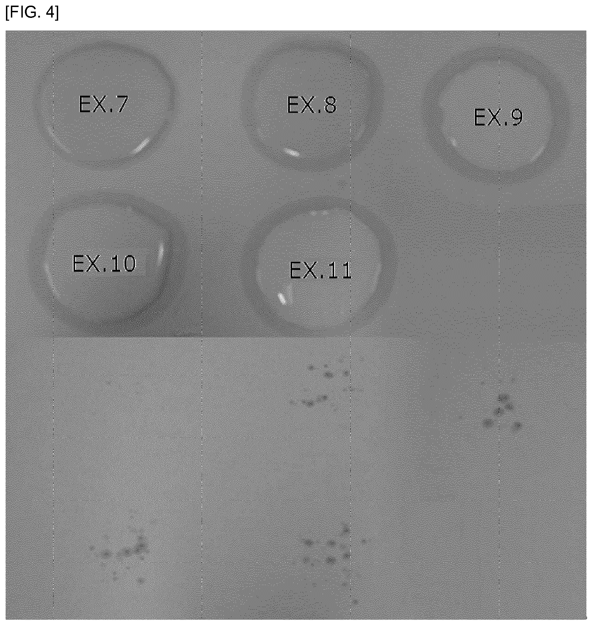

As for the migration of the plasticizers, each plastisol (5 g) prepared above was placed on a paper, the amount of the plasticizer discharged was measured, and the amount of plasticizer observed on the surface and paper was graded (very good 5>4>3>2>1 very poor) to evaluate the migration characteristics. The results are shown in Table 1, FIG. 3 and FIG. 4 below.

**[Table 1]**

| | Plasticizer (weight ratio) | Viscosity (20 rpm, cps) | Gelling rate | Migration | | |
|---|---|---|---|---|---|---|
| | | | | Surface | Paper | Average |
| Example 1 | DEHCH:TBC(9:1) | 3150 | 4.5 | 4.5 | 3 | 3.8 |
| Example 2 | DEHCH:TBC(8:2) | 3300 | 4.7 | 4.8 | 4 | 4.4 |
| Example 3 | DEHCH:TBC(7:3) | 3450 | 5 | 5 | 5 | 5.0 |
| Example 4 | DEHCH:TBOC(9:1) | 3100 | 4 | 4 | 2.5 | 3.3 |
| Example 5 | DEHCH:TBOC(8:2) | 3400 | 4 | 4 | 2.5 | 3.3 |
| Example 6 | DEHCH:TBOC(7:3) | 3600 | 4 | 4.5 | 4 | 4.3 |
| Example 7 | DEHCH:ATBC(9:1) | 3010 | 4.5 | 3.5 | 2 | 2.8 |
| Example 8 | DEHCH:ATBC(8:2) | 3080 | 4.7 | 4 | 2 | 3.0 |
| Example 9 | DEHCH:ATBC(7:3) | 3160 | 5 | 4.5 | 2 | 3.3 |
| Example 10 | DEHCH:ATBC(6:4) | 3290 | 5 | 4.8 | 2.5 | 3.7 |
| Example 11 | DEHCH:ATBC(5:5) | 3410 | 5 | 5 | 3 | 4.0 |
| Comparative Example 1 | DINP | 6050 | 4 | 5 | 5 | 5.0 |
| Comparative Example 2 | DOTP | 5550 | 3 | 1.5 | 2 | 1.8 |
| Comparative Example 3 | DEHCH | 3100 | 4 | 3.5 | 2 | 2.8 |

### Examples 4-11 are currently not claimed.

As shown in Table 1, it was confirmed that the migration characteristics of the example according to the present invention were superior compared to those of Comparative Example 3 using DEHCH alone and Comparative Example 2 using DOTP which is a non-phthalate-based plasticizer. In addition, the present invention showed the migration characteristics to the degree corresponding to that of Comparative Example 1 which used DINP, a phthalate-based plasticizer, and thus, it was confirmed that the plasticizer composition according to the present invention can improve the migration characteristics of DEHCH.

## Claims

1. A plasticizer composition comprising di(2-ethylhexyl)cyclohexane-1,4-dicarboxylate and tributyl citrate, wherein the weight ratio of di(2-ethylhexyl)cyclohexane-1,4-dicarboxylate and tributyl citrate is 9:1 to 1:1.

2. A vinyl chloride resin composition comprising 100 parts by weight of vinyl chloride resin, and 40 to 120 parts by weight of the plasticizer composition of claim 1.

3. The vinyl chloride resin composition of claim 2, further comprising at least one selected from the group consisting of stabilizers, blowing agents, fillers and titanium dioxide (TiO₂).

4. The vinyl chloride resin composition of claim 3, wherein the stabilizer is at least one selected from the group consisting of Ca-Zn-based compounds, K-Zn-based compounds, Ba-Zn-based compounds, organic Tin compounds, metallic soap-based compounds, phenol-based compounds, phosphoric acid ester-based compounds or phosphorous acid ester-based compounds.

5. The vinyl chloride resin composition of claim 3, wherein the blowing agent is at least one selected from chemical blowing agents, physical blowing agents, or a mixture thereof.

6. The vinyl chloride resin composition of claim 3, wherein the filler is at least one selected from the group consisting of calcium carbonate, talc, titanium dioxide, kaolin, silica, alumina, magnesium hydroxide, or clay.

## Patentansprüche

1. Weichmacherzusammensetzung, umfassend Di(2-ethylhexyl)cyclohexan-1,4-dicarboxylat und Tributylcitrat, wobei das Gewichtsverhältnis von Di(2-ethylhexyl)cyclohexan-1,4-dicarboxylat und Tributylcitrat 9:1 bis 1:1 beträgt.

2. Vinylchloridharzzusammensetzung, umfassend 100 Gewichtsteile Vinylchloridharz und 40 bis 120 Gewichtsteile der Weichmacherzusammensetzung nach Anspruch 1.

3. Vinylchloridharzzusammensetzung nach Anspruch 2, ferner umfassend mindestens eines, das aus der Gruppe bestehend aus Stabilisatoren, Treibmitteln, Füllstoffen und Titandioxid (TiO₂) ausgewählt ist.

4. Vinylchloridharzzusammensetzung nach Anspruch 3, wobei es sich bei dem Stabilisator um mindestens einen handelt, der aus der Gruppe bestehend aus Verbindungen auf Ca-Zn-Basis, Verbindungen auf K-Zn-Basis, Verbindungen auf Ba-Zn-Basis, organischen Zinnverbindungen, Verbindungen auf Basis von Metallseifen, Verbindungen auf Basis von Phenol, Verbindungen auf Basis von Phosphorsäureestern oder Verbindungen auf Basis von Phosphonsäureestern ausgewählt ist.

5. Vinylchloridharzzusammensetzung nach Anspruch 3, wobei es sich bei dem Treibmittel um mindestens eines handelt, das aus chemischen Treibmitteln, physikalischen Treibmitteln oder einer Mischung davon ausgewählt ist.

6. Vinylchloridharzzusammensetzung nach Anspruch 3, wobei es sich bei dem Füllstoff um mindestens einen handelt, der aus der Gruppe bestehend aus Calciumcarbonat, Talk, Titandioxid, Kaolin, Siliciumdioxid, Aluminiumoxid, Magnesiumhydroxid oder Ton ausgewählt ist.

## Revendications

1. Composition de plastifiant comprenant du cyclohexane-1,4-dicarboxylate de di(2-éthylhexyle) et du citrate de tributyle, le rapport en poids de cyclohexane-1,4-dicarboxylate de di(2-éthylhexyle) et de citrate de tributyle étant de 9 : 1 à 1 : 1.

2. Composition de résine de chlorure de vinyle comprenant 100 parties en poids de résine de chlorure de vinyle, et 40 à 120 parties en poids de la composition de plastifiant selon la revendication 1.

3. Composition de résine de chlorure de vinyle selon la revendication 2, comprenant en outre au moins l'un choisi dans le groupe constitué par des stabilisants, des agents de gonflement, des charges et du dioxyde de titane (TiO₂).

4. Composition de résine de chlorure de vinyle selon la revendication 3, le stabilisant étant au moins l'un choisi dans le groupe constitué par des composés à base de Ca-Zn, des composés à base de K-Zn, des composés à base de Ba-Zn, des composés organiques de l'étain, des composés à base de savon métallique, des composés à base de phénol, des composés à base d'ester d'acide phosphorique ou des composés à base d'ester d'acide phosphoreux.

5. Composition de résine de chlorure de vinyle selon la revendication 3, l'agent de gonflement étant au moins l'un choisi parmi des agents de gonflement chimique, des agents de gonflement physique ou un mélange correspondant.

6. Composition de résine de chlorure de vinyle selon la revendication 3, la charge étant au moins l'un choisi dans le groupe constitué par le carbonate de calcium, le talc, le dioxyde de titane, le kaolin, la silice, l'alumine, l'hydroxyde de magnésium ou l'argile.
